(19) Europäisches Patentamt
European Patent Office
Office européen des brevets

(11) Publication number: **0 137 048**
**B1**

(12) # EUROPEAN PATENT SPECIFICATION

(45) Date of publication of the patent specification: **04.02.87**

(51) Int. Cl.⁴: **C 22 B 23/04,** B 01 D 11/04

(21) Application number: **84900679.2**

(22) Date of filling: **21.02.84**

(86) International application number: **PCT/JP 84/00059**

(87) International publication number: **WO 84/03305 (30.08.84 Gazette 84/21)**

(54) **EXTRACTANT FOR USE IN EXTRACTIVE SEPARATION OF NICKEL AND COBALT AND PROCESS OF USING SAME.**

(30) Priority: **25.02.83 JP 29275/83**

(43) Date of publication of application: **17.04.85 Bulletin 85/16**

(45) Publication of the grant of the patent: **04.02.87 Bulletin 87/6**

(84) Designated Contracting States: **BE DE**

(56) References cited:
**JP-A-53 141 176**
**JP-A-55 018 546**
**JP-A-57 123 834**

**No relevant documents have been disclosed**

(73) Proprietor: **Nihon Kogyo Kabushiki Kaisha, 10-1, Toranomon 2-chome, Minato-ku Tokyo 105 (JP)**

(72) Inventor: **OGATA, Takashi Central Laboratory, Nihon Kogyo Kabushiki Kaisha 17-35, Niizominami, 3-chome Toda-shi, Saitama-ken 335 (JP)**
Inventor: **NAMIKAWA, Keishi Nihon Kogyo Kabushiki Kaisha, 10-1, Toranomon 2-chome, Minato-ku Tokyo 105 (JP)**
Inventor: **UEJYO, Satoru Central Laboratory, Nihon Kogyo Kabushiki Kaisha 17-35, Niizominami, 3-chome Toda-shi, Saitama-ken 335 (JP)**
Inventor: **KASAI, Shunichi Central Laboratory, Nihon Kogyo Kabushiki Kaisha 17-35, Niizominami, 3-chome Toda-shi, Saitama-ken 335 (JP)**

(74) Representative: **Schwan, Gerhard, Dipl.-Ing., Elfenstrasse 32, D-8000 München 83 (DE)**

**EP 0 137 048 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1987

## Description

### Technical Field

This invention relates to an extractant for use in extractive separation of nickel and cobalt, and a process of extractive separation using the same.

### Background of the Invention

As extractants for solvent-extracting cobalt from an aqueous solution containing nickel and cobalt to separate cobalt from nickel, alkyl phosphonic acid monoalkyl esters expressed by the following formula are known in the art:

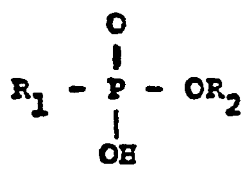

(wherein $R_1$ and $R_2$ are alkyl groups each of which has from 8 to 10 carbon atoms.)

Typical examples employed hitherto were 2-ethyl-1-hexyl phosphonic acid mono-2-ethyl-1-hexyl ester ($R_1$ and $R_2 = C_8$), 3,5,5-trimethyl-3-hexyl phosphonoic acid mono-3,5,5-trimethyl-3-hexyl ester ($R_1$ and $R_2$, $C_9$), and isodecyl phosphonic acid monoisodecyl ester ($R_1$ and $R_2$, $C_{10}$). For example, the reference is to be made to U.S. Patent No. 4,196,076 (corresponding to JP-A- 53 141 176). In extractive separation of nickel and cobalt, an aqueous solution containinc cobalt and nickel is contacted with an extracting solvent having an aforementioned extractant diluted with a diluent, whereby cobalt is transferred from the aqueous phase into the organic phase. Thereafter, the organic phase containing cobalt is separated from the aqueous phase containing nickel.

However, when such conventional extractants were employed, serious disadvantages were encountered. For example, when 2-ethylhexyl-phosphonic acid mono-2-ethylhexyl ester is employed, in the form of an organic solvent composed of 20 percent of the extractant and 80 percent of a diluent Dispersol, at PH 6, in extracting cobalt from a nickelcobalt solution, then up to 15 g/l of cobalt will be extracted into the organic solvent. With the maximum cobalt content the resulting solution will exhibit a kinematic viscosity as high as 350 cSt, which will make smooth process operation impossible on an industrial scale. For instance, feed pumps will not run satisfactorily with liquids whose kinematic viscosities are in excess of 150 cSt. Such a highly viscous liquid, which involves inadequate agitation and phase separation, will render the operation difficult.

For this reason a disadvantge common to the existing extractants is that cobalt cannot be extracted up to their permissible extraction capacities. Since the proportion must be kept low relative to the extractable cobalt content, the extractant must be used abundantly.

There has also been demand for extractants with higher extractive separation factors than heretofore.

### Disclosure of the Invention

The present invention is directed at an extractant which overcomes the foregoing problems, and provides an extractant for the extractive separation of nickel and cobalt which is composed of an alkyl phosphonic acid monoalkyl ester expressed by the following general formula:

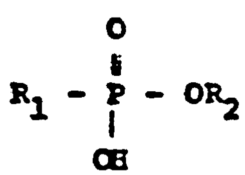

(where $R_1$ and $R_2$ are alkyl groups, $R_1$ having 4 carbon atoms $R_2$ having 8 carbon atoms)

Further, this invention provides an extractive separation process of nickel and cobalt comprising contacting

an acueous solution containing nickel and cobalt with an organic solvent employing an extractant composed of anlkyl phosphonic acid monoalkyl ester expressed by the following general formula:

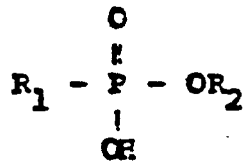

(where $R_1$ and $R_2$ are alkyl groups, $R_1$ having 4 carbon atoms and $R_2$ having 8 carbon atoms) to transfer cobalt into the organic solvent and separating the organic solvent phase and the aqueous phase produced from each other.

This invention is based on the discovery that the performance of alkyl phosphonic acid monoalkyl ester as extractant in the extractive separation of nickel and cobalt is remarkably improved by specificly selecting an alkyl group having 4 carbon atoms as $R_1$ and an alkyl group having 8 carbon atoms as $R_2$, instead of previous selection of alkyl groups having 8 to 10 carbon atoms as $R_1$ and $R_2$, respectively, with respect to alkyl groups $R_1$ and $R_2$ in alkyl phosphonic acid monoalkyl ester.

The invention will now be described in more detail.

The liquid for which the extractant according to this invention can be used is a mixed solution of nickel and cobalt. The mixed liquid is obtained by dissolving with an acid a socalled mixed sulfide containing nickel and cobalt, scraps of superalioys and the like, waste Ni-Co-containing catalyst or slag or the like.

In order to secure an adequate surface contact area, the extractant is diluted with a diluent to a ratio usually ranging from 1:10 to 1001. The diluent to be used is kerosene, Dispersol, or the like.

The mixed solution of cobalt and nickel to be extracted is trought into contact with the organic solvent prepared by diluting the extractant, at a ratio from 1 : 10 bis 10 : 1.

The pH at which contact operation is conducted ranges from 3 to 8, preferably from 4 to 7. The contacting liquid temperature is between room temperature and about 70°C or so.

In the operation of this invention, the contact between an organic solvent phase and an aqueous phase is made for a given time period employing any contacting device conventionally employed in liquid-liquid extraction field to effect the good mixing of the both phases and then the organic solvent phase and the aqueous phase are again separated by allowing them to stand or by centrifugal action.

Useful extractants include, for examples, (1) n-buthyl-phosphonic acid mono-n-octyl ester, (2) n-butylphosphonic acid mono-2-ethylhexyl ester, and (3) isobutylphosphonic acid mono-2-ethylhexyl ester.

The use of the extractant according to the invention presents the following advantages:

(1) Even when cobalt is present at a high level in the organic solvent, the increase in the kinematic viscosity of the liquid is low enough to assure smooth operation.

(2) The Ni-Co extractive separation factor is so high that high-purity metallic nickel and cobalt can be easily recovered.

(3) With exceptionally low solubility in water, the extractant is little lost while in use.

**Preferred examples for practice of the Invention and comparative example**

**Example 1**

Nickel and cobalt were separated by extraction from an aqueous solution containing the both by the use of n-butylphosphonic acid mono-n-octyl ester as an extractant.

An organic solvent, prepared by mixing 16 percent of the extractant with 84 percent of a diluent, was kept in contact with the aqueous solution at 60°C for 5 minutes. The diluent was Dispersol.

The aqueous solution was a sulfuric acid solution containing 32.2 g of nickel and 15.2 9 of cobalt per liter, and was adjusted to pH 6 at the time of contact. As a pH buffering agent, $(NH_4)_2SO_4$ was contained in the aqueous solution at a concentration of 30 g/l. The ratio of organic solvent phase to acueous phase (O/A) was set to 1.

The results showed an extremelv high Ni-Co extractive separation factor B of 27,140 and a very low kineratic viscosity of 14.6 cSt attained (at 60'C) despite the fact that the organic solvent had pH 6 with a Co concentration of as much as 15.2 g/l.

The extractive separation factor β was calculated by the following formula.

$$\beta = \frac{\text{Co Conc. (g/ℓ) in organic phase}}{\text{Co Conc. (g/ℓ) in aqueous phase}} \div \frac{\text{Ni Conc. (g/ℓ) in organic phase}}{\text{Ni Conc. (g/ℓ) in aqueous phase}}$$

**Example 2**

. Extractive separation was performed under the same conditions as described above, except that n-butylphosphonic acid mono-2-ethylhexyl ester was employed instead as the extractant. The Ni-Co extractive separation factor β was as high as 10,250.

Despite the Co concentration in the organic solvent of 15.2 g/l and the pH value of 6, the kinematic viscosity was extremely low at 3.7 cSt (60° C).

**Example 3**

Using the organic phase of Example 2, the tests were repeated, provided that nickel and cobalt concentrations in aqueous phase before extraction was 29.8 g/l and 17.1 g/l, respectively.

The result was as follows:

| | Equilibrium pH | Conc. in aqueous phase After extraction (g/ℓ) | | Conc. in organic phase After extraction (g/ℓ) | | β | Kinematic Viscosity (cSt) |
|---|---|---|---|---|---|---|---|
| | | Ni | Co | Ni | Co | | |
| (1) | 6.0 | 29.6 | 0.406 | 0.101 | 16.5 | 11,910 | - |
| (2) | 6.3 | 30.0 | 0.233 | 0.271 | 16.9 | 8,030 | 3.6 |

**Comparative Example**

An organic solvent was prepared which contained as the extractant 2-ethylhexylphosphonic acid mono-2-ethylyexyl ester in the same molar concentration as in Example and extractive separation was performed in the same condition as Example.

The extractive separation factor was low at 3,456. Hence, in contrast to the present invention, the procedure could hardly yield high-purity metallic nickel or cobalt.

For the comparision of kinematic viscosities, extraction was effected so that the organic solvent containing the extraction agent mentioned immediately above attained a Co concentration of 15.2 g/l. The kinematic viscosity was much higher than under the invention, at 394 cSt (60° C). Because the viscosity exceeded the workable limit of 150 cSt (60° C), smooth operation was impossible.

**Industrial Applicability**

This invention permits to separate Co and Ni in a high purity with a simple and convenient means of solvent extraction process from Ni-Co-containing alloy scraps, waste catalysts etc. In solvent extraction process, this

invention successfully achieves its smoothened operation and decreased amount of extractant to be consumed. This invention is advantageous from the viewpoint of reuse of resources.

**Claims**

1) An extractant for the extractive separation of nickel, and cobalt which is composed of an alkyl phosphonic acid monoalkyl ester expressed by the following general formula

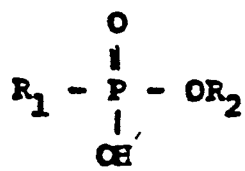

(where $R_1$ and $R_2$ are alkyl groups, $R_1$ having 4 carbon atoms and $R_2$ having 8 carbon atoms.)

2) An extractive separation process of nickel and cobalt comprising contacting an aqueous solution containing nickel and cobalt with an organic solvent employing an extractant composed of alkyl phosphonic acid monoalkyl ester expressed by the following general formula

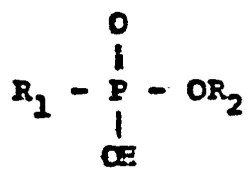

(where $R_1$ and $R_2$ are alkyl groups, $R_1$ having 4 carbon atoms and $R_2$ having 8 carbon atoms) to transfer cobalt into the organic solvent and separating the organic solvent phase and the aqueous phase-produced from each other.

**Patentansprüche**

1. Extraktionsmittel für die extrahierende Trennung von Nickel und Kobalt, bestehend aus einem Alkylphosphonsäuremonoalkylester der folgenden allgemeinen Formel

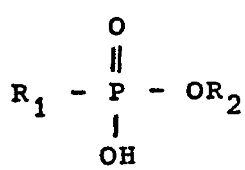

(wobei $R_1$ und $R_2$ Alkylgruppen sind und $R_1$ 4 Kohlenstoffatome sowie $R_2$ 8 Kohlenstoffatome aufweist).

2. Verfahren zur extrahierenden Trennung von Nickel und Kobalt, bei dem eine Nickel und Kobalt enthaltende wäßrige Lösung mit einem organischen Lösungsmittel unter Verwendung eines Extraktionsmittels bestehend aus Alkylphosphonsäuremonoalkylester der folgenden allgemeinen Formel

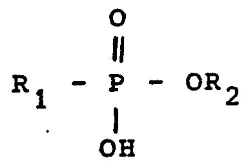

(wobei $R_1$ und $R_2$ Alkylgruppen sind und $R_1$ 4 Kohlenstoffatome sowie $R_2$ 8 Kohlenstoffatome aufweist) in Kontakt gebracht wird, um Kobalt in das organische Lösungsmittel zu überführen, und die organische Lösungsmittelphase und die erzeugte wäßrige Phase voneinander getrennt werden.

**Revendications**

1°- Extractant pour la séparation par extraction du nickel et du cobalt qui est composé d'un ester monoalkylique d'acide alkylphosphonique représenté par la formule générale suivante:

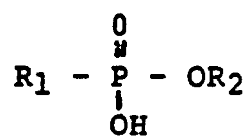

(dans laquelle $R_1$ et $R_2$ sont des groupes alkyles, $R_1$ ayant 4 atomes de carbone et $R_2$ ayant 8 atomes de carbone).

2°- Procédé de séparation par extraction du nickel et du cobalt comprenant le contact d'une solution aqueuse contenant du nickel et du cobalt avec un solvant organique employant un extractant composé d'ester monoalkylique d'acide alkylphosphoniqué représenté par la formule générale suivante:

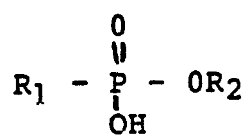

(dans laquelle $R_1$ et $R_2$ sont des groupes alkyles, $R_1$ ayant 4 atomes de carbone et $R_2$ ayant 8 atomes de carbone) pour transférer le cobalt dans le solvant organique, et la séparation mutuelle de la phase de solvant organique et de la phase aqueuse produites.